# EUROPEAN PATENT SPECIFICATION

(11) **EP 4 019 308 B1**
(45) Date of publication and mention of the grant of the patent: **14.05.2025**
(21) Application number: 21203570.3
(22) Date of filing: 19.10.2021
(51) Int. Cl.: B60K 1/04, B60K 7/00, B62M 6/65

(54) **ELECTRIC WHEEL HUB**
ELEKTRISCHE RADNABE
MOYEU DE ROUE ÉLECTRIQUE

(30) Priority: 28.12.2020 TW 109146493
(43) Date of publication of application: 29.06.2022
(73) Proprietor: Solid Year Co., Ltd., New Taipei City 221 (TW)
(72) Inventor: HUANG, Herman, 116 Taipei City (TW)
(74) Representative: dompatent von Kreisler Selting Werner - Partnerschaft von Patent- und Rechtsanwälten mbB

(56) References cited:
- TW-A- 201 925 000
- US-A1- 2011 259 658
- US-A1- 2012 083 375
- US-B2- 10 811 647

## Description

### BACKGROUND OF THE INVENTION

### Field of the Invention

The present invention relates to an electric wheel hub.

### Description of the Prior Art

Bicycles were prevalent in many places. With the changes in lifestyles, the environmental awareness and the concept of physical fitness, bicycles are popularly used in daily lives. With development of technology, electric bicycles have been a booming trend, especially in cities. The electric bicycles can be roughly classified into types with hub motor and mid-mounted motor. The advantages of the type with hub motor are that it is compact and artistic in appearance, that the appearance of the bicycle is concise, that the price is low, that there is relatively lower level of requirement for the bicycle frame, and that there is relatively lower requirement for the chain, so the electric bicycles are popular around the world. TW M580517, TW M580522 and TW I701176 disclose the like electric bicycles. An electric bicycle according to the preamble of claim 1 is known from US 2012/083375.

However, the above-mentioned wheel hub motor has a complicated structure, many parts and components are interconnected, and it is difficult and time-consuming to dismantle and replace. Therefore, it needs a repairer who knows specific model of the wheel hub motor well to repair and/or replace the parts and components, which is inconvenient.

The present invention is, therefore, arisen to obviate or at least mitigate the above-mentioned disadvantages.

### SUMMARY OF THE INVENTION

The main object of the present invention is to provide an electric wheel hub which can greatly simplify the difficulty of maintenance and/or replacement.

To achieve the above and other objects, an electric wheel hub is provided, including: a shell; a motor assembly, including a stator, a rotor and a shaft, the stator and the rotor being received in the shell and relatively rotatable, the rotor being connected and rotatable with the shell, the shaft defining an axial direction and a circumferential direction, the shaft being movable in the axial direction and disposed through the stator, the shaft and the stator being relatively non-rotatable in the circumferential direction; and a battery unit, received in the shell, electrically connected with the motor assembly.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a drawing showing an application of a preferable embodiment of the present invention;
Fig. 2 is a partial enlarged cross-sectional of Fig. 1;
Fig. 3 is a stereogram of a preferable embodiment of the present invention;
Fig. 4 is a partial breakdown drawing of a preferable embodiment of the present invention;
Fig. 5 is a detailed breakdown drawing of a preferable embodiment of the present invention;
Fig. 6 is a drawing showing a shaft, a frame and two end caps of a preferable embodiment of the present invention;
Fig. 7 is a side view of the shaft and the frame combined according to a preferable embodiment of the present invention; and
Fig. 8 is a drawing showing the shaft and the two end caps combined according to
a preferable embodiment of the present invention.

### DETAILED DESCRIPTION OF THE PREFERRED EMBODIMENTS

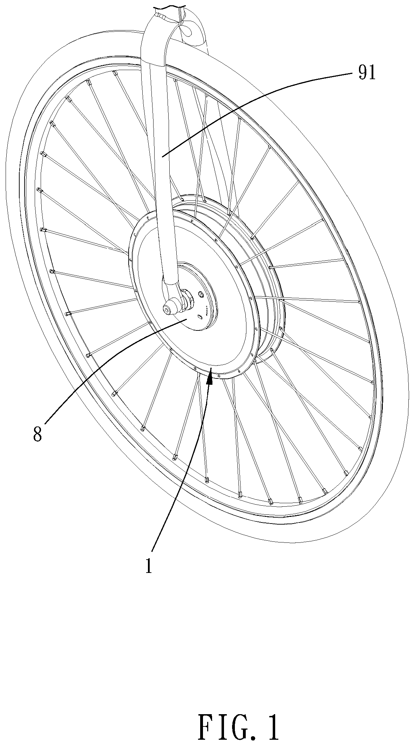

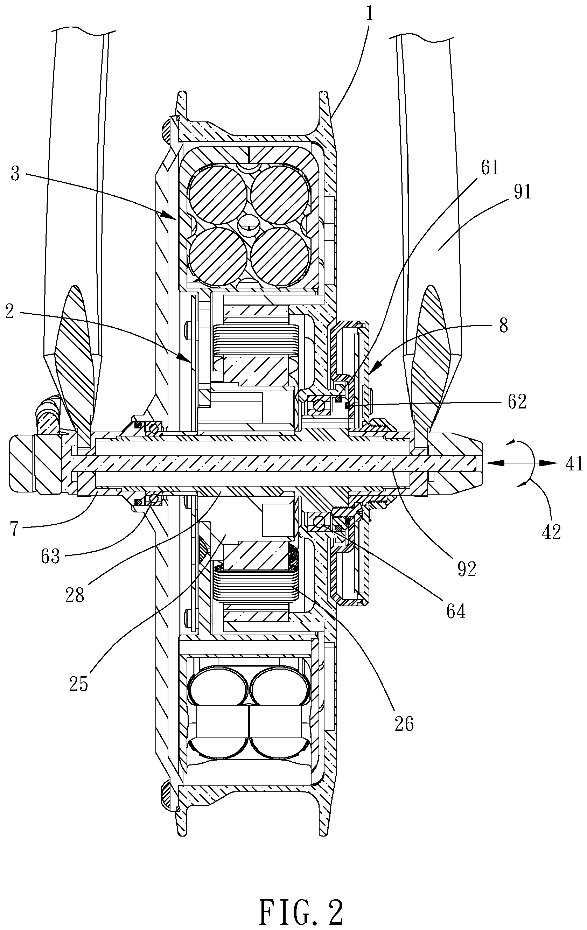

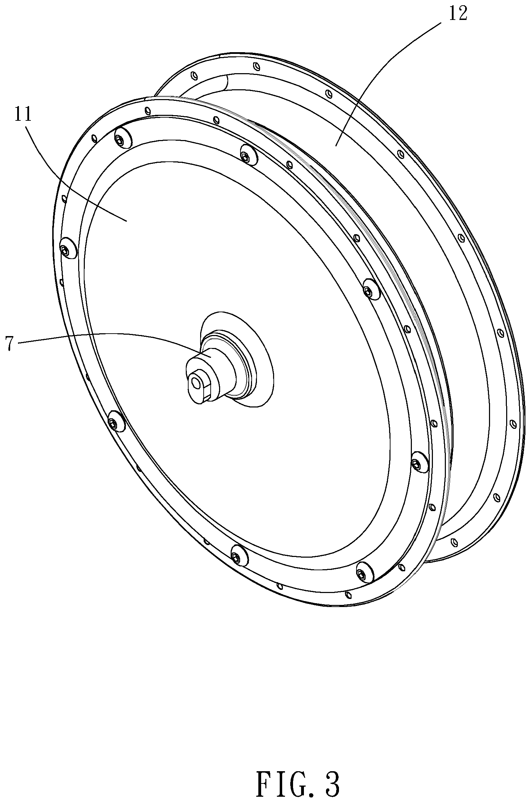

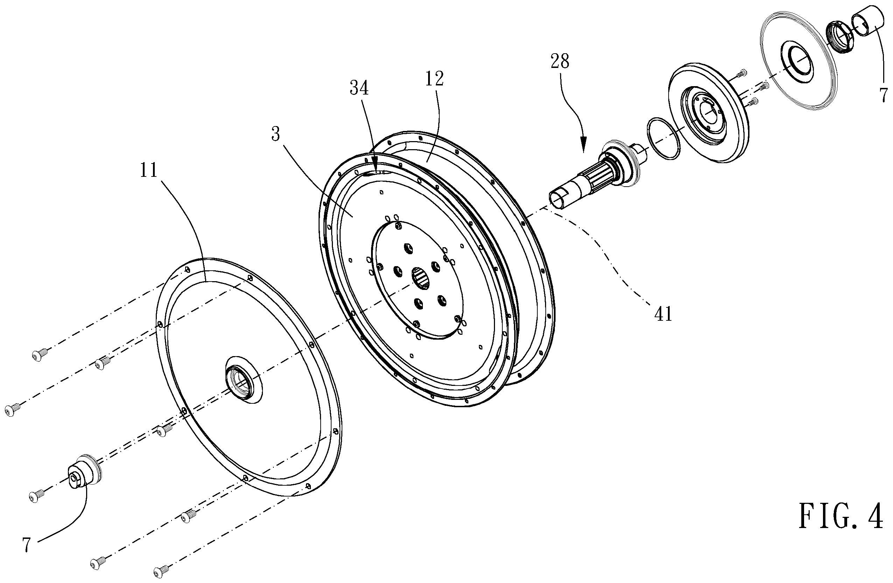

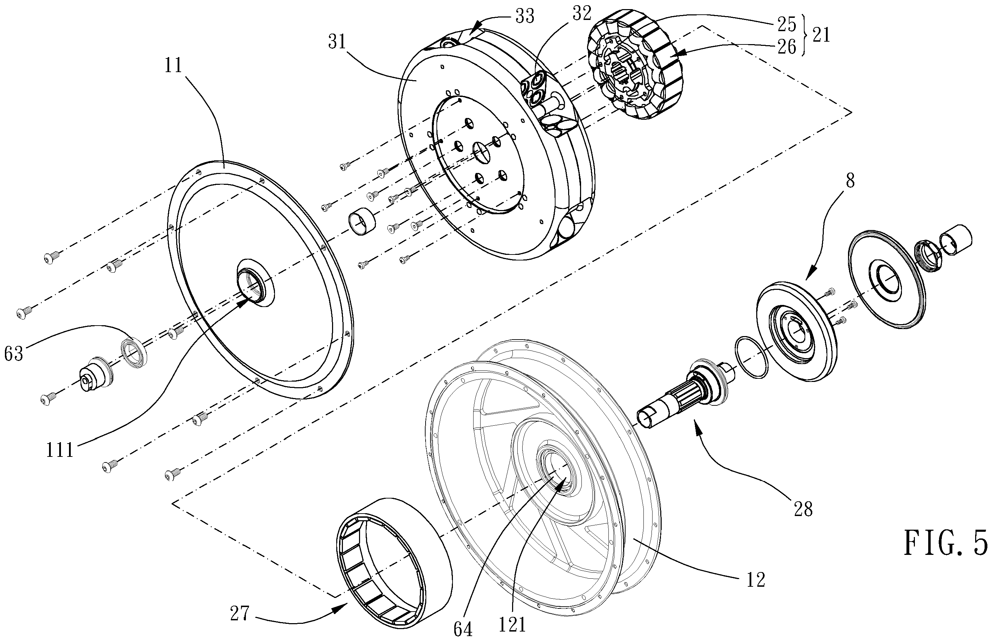

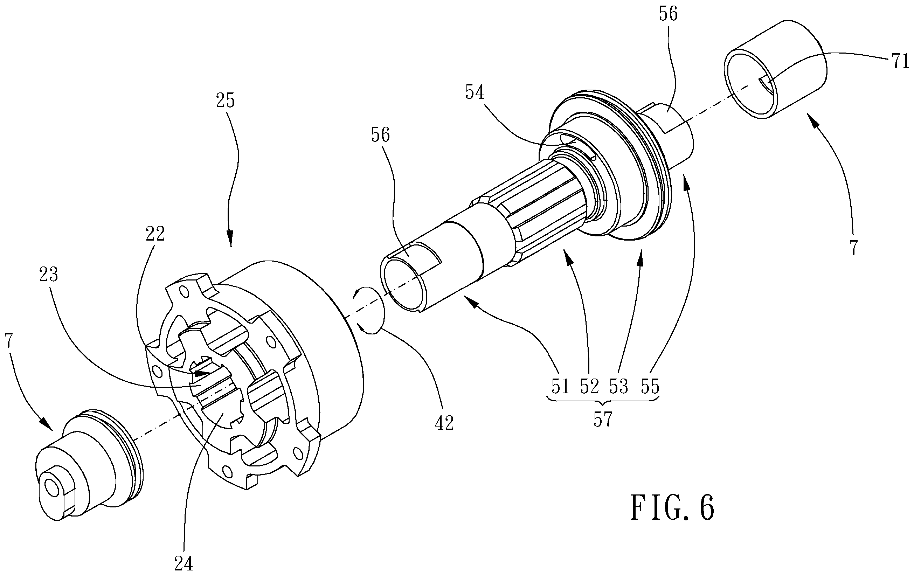

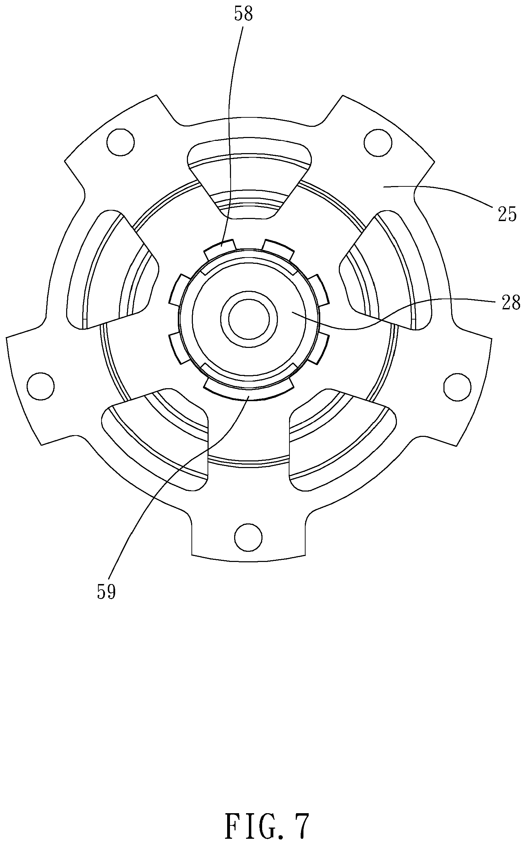

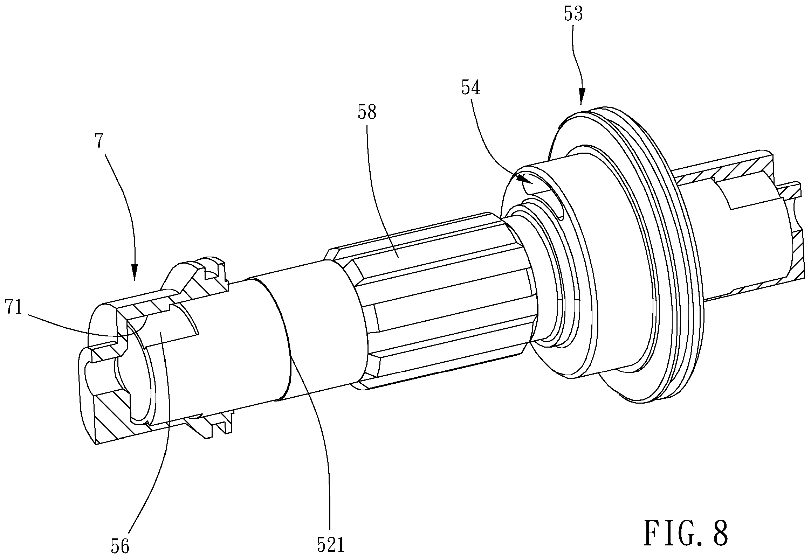

Please refer to Figs. 1 to 8 for a preferable embodiment of the present invention. An electric wheel hub of the present invention includes a shell 1, a motor assembly 2 and a battery unit 3.

The motor assembly 2 includes a stator 21, a rotor 27 and a shaft 28, the stator 21 and the rotor 27 are received in the shell 1 and relatively rotatable, and the rotor 27 is connected and rotatable with the shell 1. The shaft 28 defines an axial direction 41 and a circumferential direction 42, the shaft 28 is movable in the axial direction 41 and disposed through the stator 21, and the shaft 28 and the stator 21 are relatively non-rotatable in the circumferential direction 42. The battery unit 3 is received in the shell 1 and electrically connected with the motor assembly 2. The shaft 28 is detachably connected with the stator 21 so that the wheel hub can be quickly detached or installed without dismantling parts in the motor assembly 2, which is easy to uninstall/install and lowers the repairing cost.

Specifically, the electric wheel hub further includes a first bearing 63 and a second bearing 64, the shell 1 includes a base 12 and a cover 11, and the cover 11 is detachably covered to the base 12. The cover 11 includes a first through hole 111, the base 12 includes a second through hole 121, the first bearing 63 is received in the first through hole 111, the second bearing 64 is received in the second through hole 121, and the shaft 28 is disposed through the first bearing 63 and the second bearing 64 and protrusive out beyond opposing sides of the shell 1. Since the shaft 28 is detachably connected to the stator 21, the first bearing 63 and the second bearing 64 do not have to be detached as the shaft 28 is removed, which avoids loss of the first bearing 63 and the second bearing 64, and simplifies the detachment process. To replace the first bearing 63 or the second bearing 64, the motor assembly 2 does not have to be detached, which is easy and convenient.

Specifically, the shaft 28 further includes a first end portion 51, a connection portion 52, a flange 53 and a second end portion 55 in sequence. The first end portion 51 is disposed through the first bearing 63 and the cover 11, the second end portion 55 is disposed through the second bearing 64 and the base 12, and the connection portion 52 is connected with the stator 21. An intersection of the connection portion 52 and the first end portion 51 includes a stepped portion 521, the first bearing 63 is abutted against the cover 11 and the stepped portion 521 in the axial direction 41, and the second bearing 64 is abutted between the base 12 and the flange 53 between so as to improve stability of the first bearing 63 and the second bearing 64.

The shaft 28 further includes an axle 57 and a plurality of first engaging portions 58, and the plurality of first engaging portions 58 are separately arranged on the axle 57 in the circumferential direction 42. The axle 57 includes the first end portion 51, the connection portion 52, the flange 53 and the second end portion 55, the connection portion 52 includes the plurality of first engaging portions 58, and the stator 21 includes a perforation 22 and a plurality of second engaging portions 23. The plurality of second engaging portions 23 are separately arranged around the perforation 22 in the circumferential direction 42. The axle 57 is disposed through the perforation 22. The plurality of first engaging portions 58 and the plurality of second engaging portions 23 are engaged with each other so that the shaft 28 is detachable from the stator 21. One of each said first engaging portion 58 and the second engaging portion 23 is a first groove, and the other of each said first engaging portion 58 and the second engaging portion 23 is a first rib. For example, each said first engaging portion 58 is a first rib, and each said second engaging portion 23 is a first groove.

Preferably, the shaft 28 further includes a third engaging portion 59, the stator 21 further includes a fourth engaging portion 24, and the third engaging portion 59 and the fourth engaging portion 24 are engaged with each other. One of the third engaging portion 59 and the fourth engaging portion 24 is a second groove, and the other of the third engaging portion 59 and the fourth engaging portion 24 is a second rib, so that the shaft 28 and the stator 21 can be easily and accurately assembled. The second groove is not identical to the first groove, and the second rib is not identical to the first rib.

The battery unit 3 includes a cartridge 31 and a plurality of batteries 32, and the plurality of batteries 32 are positionally received within the cartridge 31 so that it is easy to install and maintain and is stable. In other embodiments, the battery unit 3 may be provided without the cartridge 31. The cartridge 31 is preferably made of plastic material (such as ABS-PC material) which is of good insulation.

In this embodiment, the cartridge 31 is annular, the cartridge 31 is disposed around the motor assembly 2, and the plurality of batteries 32 are separately disposed around the motor assembly 2. Specifically, the motor assembly 2 is inserted to a central portion of the cartridge 31, and the cartridge 31 is connected with the stator 21 and is not connected with the shell 1, so that the cartridge 31 is non-rotatable for providing good stability of the plurality of batteries 32.

Specifically, the stator 21 includes a frame 25 and a winding coil set 26, the winding coil set 26 is wound around the frame 25, the shaft 28 is disposed through the frame 25, the frame 25 includes the perforation 22, the plurality of second engaging portions 23 and the fourth engaging portion 24, and the cartridge 31 is connected with the frame 25. As a result, to replace the battery unit 3, it needs only to withdraw the shaft 28 and open the cover 11, and the battery unit 3 can be easily replaced without dismantling parts inside the motor assembly 2 and without dismantling the first bearing 63 and the second bearing 64.

Preferably, inner walls of the cartridge 31 and the shell 1 define at least one insertion portion 34 therebetween, and the at least one insertion portion 34 is configured for easy detachment of the cartridge 31 from the shell 1. In this embodiment, the at least one insertion portion includes a plurality of insertion portions 34, an outer circumferential wall of the cartridge 31 includes a plurality of openings 33, the plurality of batteries 32 are partially exposed from the opening 33, and the plurality of openings 33 and the inner wall of the shell 1 form the plurality of the insertion portion 34. The plurality of batteries 32 can be observed from the plurality of openings 33, which helps to evaluate conditions of the plurality of batteries 32.

The electric wheel hub further includes two end caps 7 configured to be respectively connected to two fork arms 91, the two end caps 7 are detachably disposed respectively around opposing ends of the shaft 28, and the shaft 28 is hollow and configured for a spindle 92 to be disposed therethrough. The shaft 28 which is hollow can lower the weight and increase compatibility for the spindle 92. For example, various types of end caps can be used to receive various types of the spindles (having respective diameters of 9 mm, 12 mm and 15 mm, for example).

Preferably, each of the opposing ends of the shaft 28 includes a first positioning portion 56, each of the two end caps 7 includes a second positioning portion 71, and the second positioning portion 71 and the first positioning portion 56 are engaged with each other so as to provide stable and accurate combination of the two end caps 7 and the shaft 28. One of the first positioning portion 56 and the second positioning portion 71 is a projection, and the other of the first positioning portion 56 and the second positioning portion 71 is a recess.

In this embodiment, each said third engaging portion 59 is one said second rib, and each said fourth engaging portion 24 is one said second groove. In the circumferential direction 42, the second rib has a length more than 2 times a length of the first rib, which further enhances the structural strength of the combination.

An electronic control unit 8 is disposed on the base 12, and the electronic control unit 8 is positioned to the second end portion 55 and abutted against the flange 53. The electronic control unit 8 is movable with the shaft 28 in the axial direction 41, so that the electronic control unit 8 can be individually replaced without dismantling the shell 1. The flange 53 includes a penetration hole 54 extending in the axial direction 41, and the penetration hole 54 is configured for arranged wires to electrically connect the electronic control unit 8 outside the shell 1 and the motor assembly 2 inside the shell 1. A side of the flange 53 facing toward the second through hole 121 includes a first annular member 61, and a side of the flange 53 facing toward the electronic control unit 8 includes a second annular member 62. The first annular member 61 prevents dust and/or mist form coming into the shell 1, and the second annular member 62 improves stability of the combination of the electronic control unit 8 and the shaft 28 and provides good buffering and shock-absorption.

In sum, in the design of the electric wheel hub, the maintenance and/or
replacement frequency and difficulty of different components are taken into account, which allows the maintenance and/or replacement to be carried out without dismantling the motor assembly. As a result, it can greatly simplify the difficulty of maintenance and/or replacement.

Although particular embodiments of the invention have been described in detail for purposes of illustration, various modifications and enhancements may be made without departing from the scope of the invention.

## Claims

1. An electric wheel hub, including:
a shell (1);
a motor assembly (2), including a stator (21), a rotor (27) and a shaft (28), the stator (21) and the rotor (27) being received in the shell (1) and relatively rotatable, the rotor (27) being connected and rotatable with the shell (1), the shaft (28) defining an axial direction (41) and a circumferential direction (42), the shaft (28) being movable in the axial direction (41) and disposed through the stator (21), the shaft (28) and the stator (21) being relatively non-rotatable in the circumferential direction (42); and
a battery unit (3), received in the shell (1), electrically connected with the motor assembly (2)
**characterized in that**
the electric wheel hub further includes two end caps (7) configured to be respectively connected to two fork arms (91), wherein the two end caps (7) are detachably disposed respectively around opposing ends of the shaft (28), and the shaft (28) is hollow and configured for a spindle (92) to be disposed therethrough.

2. The electric wheel hub of claim 1, wherein the battery unit (3) includes a cartridge (31) and a plurality of batteries (32), and the plurality of batteries (32) are positionally received within the cartridge (31).

3. The electric wheel hub of claim 2, wherein inner walls of the cartridge (31) and the shell (1) define at least one insertion portion (34) therebetween, and the at least one insertion portion (34) is configured for easy detachment of the cartridge (31) from the shell (1).

4. The electric wheel hub of claim 2, wherein the cartridge (31) is disposed around the motor assembly (2), the cartridge (31) is connected with the stator (21) and is not connected with the shell (1), and the plurality of batteries (32) are disposed around the motor assembly (2) in intervals.

5. The electric wheel hub of claim 1, further including a first bearing (63) and a second bearing (64), wherein the shell (1) includes a base (12) and a cover (11), the cover (11) is detachably covered to the base (12), the cover (11) includes a first through hole (111), the base (12) includes a second through hole (121), the first bearing (63) is received in the first through hole (111), the second bearing (64) is received in the second through hole (121), and the shaft (28) is disposed through the first bearing (63) and the second bearing (64) and protrusive out beyond opposing sides of the shell (1); the shaft (28) further includes a first end portion (51), a connection portion (52), a flange (53) and a second end portion (55) connected in sequence; the first end portion (51) is disposed through the first bearing (63) and the cover (11), the second end portion (55) is disposed through the second bearing (64) and the base (12), the connection portion (52) is connected with the stator (21), an intersection of the connection portion (52) and the first end portion (51) includes a stepped portion (521), the first bearing (63) is abutted against the cover (11) and the stepped portion (521) in the axial direction (41), and the second bearing (64) is abutted between the base (12) and the flange (53).

6. The electric wheel hub of claim 1, wherein the shaft (28) further includes an axle (57) and a plurality of first engaging portions (58), the plurality of first engaging portions (58) are separately arranged on the axle (57) in the circumferential direction (42), the stator (21) includes a perforation (22) and a plurality of second engaging portions (23), the plurality of second engaging portions (23) are separately arranged around the perforation (22) in the circumferential direction (42), the axle (57) is disposed through the perforation (22), the plurality of first engaging portions (58) and the plurality of second engaging portions (23) are engaged with each other, one of each said first engaging portion (58) and each said second engaging portion (23) is a first groove, and the other of each said first engaging portion (58) and each said second engaging portion (23) is a first rib.

7. The electric wheel hub of claim 6, wherein the shaft (28) further includes a third engaging portion (59), the stator (21) further includes a fourth engaging portion (24), the third engaging portion (59) and the fourth engaging portion (24) are engaged with each other, one of the third engaging portion (59) and the fourth engaging portion (24) is a second groove, and the other of the third engaging portion (59) and the fourth engaging portion (24) is a second rib; the second groove is not identical to the first groove, and the second rib is not identical to the first rib.

8. The electric wheel hub of claim 1, wherein each of the opposing ends of the shaft (28) includes a first positioning portion (56), each of the two end caps (7) includes a second positioning portion (71), and the second positioning portion (71) and the first positioning portion (56) are engaged with each other; one of the first positioning portion (56) and the second positioning portion (71) is a projection, and the other of the first positioning portion (56) and the second positioning portion (71) is a recess.

9. The electric wheel hub of claim 7, wherein the battery unit (3) includes a cartridge (31) and a plurality of batteries (32), and the plurality of batteries (32) are positionally received within the cartridge (31); inner walls of the cartridge (31) and the shell (1) define at least one insertion portion (34) therebetween, and the at least one insertion portion (34) is configured for easy detachment of the cartridge (31) from the shell (1); the cartridge (31) is disposed around the motor assembly (2), the cartridge (31) is connected with the stator (21) and is not connected with the shell (1), and the plurality of batteries (32) are disposed around the motor assembly (2) in intervals; the electric wheel hub further includes a first bearing (63) and a second bearing (64), the shell (1) includes a base (12) and a cover (11), the cover (11) is detachably covered to the base (12), the cover (11) includes a first through hole (111), the base (12) includes a second through hole (121), the first bearing (63) is received in the first through hole (111), the second bearing (64) is received in the second through hole (121), the shaft (28) is disposed through the first bearing (63) and the second bearing (64) and protrusive out beyond opposing sides of the shell (1); the shaft (28) further includes a first end portion (51), a connection portion (52), a flange (53) and a second end portion (55) connected in sequence; the first end portion (51) is disposed through the first bearing (63) and the cover (11), the second end portion (55) is disposed through the second bearing (64) and the base (12), the connection portion (52) is connected with the stator (21), an intersection of the connection portion (52) and the first end portion (51) includes a stepped portion (521), the first bearing (63) is abutted against the cover (11) and the stepped portion (521) in the axial direction (41), and the second bearing (64) is abutted between the base (12) and the flange (53); the electric wheel hub further includes two end caps (7) configured to be respectively connected to two fork arms (91), the two end caps (7) are detachably disposed around opposing ends of the shaft (28), and the shaft (28) is hollow and configured for a spindle (92) to be disposed therethrough; each of the opposing ends of the shaft (28) includes a first positioning portion (56), each of the two end caps (7) includes a second positioning portion (71), and the second positioning portion (71) and the first positioning portion (56) are engaged with each other; one of the first positioning portion (56) and the second positioning portion (71) is a projection, and the other of the first positioning portion (56) and the second positioning portion (71) is a recess; the cartridge (31) is made of plastic material; the cartridge (31) is annular, the motor assembly (2) is inserted to a central portion of the cartridge (31); the at least one insertion portion (34) includes a plurality of insertion portions (34), and an outer circumferential wall of the cartridge (31) includes a plurality of openings (33), the plurality of batteries (32) are partially exposed from the plurality of openings (33); an electronic control unit (8) is disposed on the base (12), and the electronic control unit (8) is positioned to the second end portion (55) and abutted against the flange (53); the flange (53) includes a penetration hole (54) extending in the axial direction (41); a side of the flange (53) facing toward the second through hole (121) includes a first annular member (61), and a side of the flange (53) facing toward the electronic control unit (8) includes a second annular member (62); each said first engaging portion (58) is one said first rib, each said second engaging portion (23)is one said first groove, each said third engaging portion (59) is one said second rib, each said fourth engaging portion (24) is one said second groove; in the circumferential direction (42), the second rib has a length more than 2 times a length of the first rib; the axle (57) includes the first end portion (51), the connection portion (52), the flange (53) and the second end portion (55), and the connection portion (52) includes the plurality of first engaging portions (58); the stator (21) includes a frame (25) and a winding coil set (26), the winding coil set (26) is wound around the frame (25), and the shaft (28) is disposed through the frame (25); the frame (25) includes the perforation (22), the plurality of second engaging portions (23) and the fourth engaging portion (24), and the cartridge (31) is connected with the frame (25).

## Patentansprüche

1. Elektrische Radnabe mit:
einem Gehäuse (1);
einer Motorbaugruppe (2) mit einem Stator (21), einem Rotor (27) und einer Welle (28), wobei der Stator (21) und der Rotor (27) in dem Gehäuse (1) aufgenommen sind und relativ drehbar sind, wobei der Rotor (27) mit dem Gehäuse (1) verbunden und drehbar ist, wobei die Welle (28) eine axiale Richtung (41) und eine Umfangsrichtung (42) definiert, wobei die Welle (28) in axialer Richtung (41) bewegbar ist und durch den Stator (21) hindurch angeordnet ist, wobei die Welle (28) und der Stator (21) in der Umfangsrichtung (42) nicht relativ drehbar sind; und
einer in dem Gehäuse (1) aufgenommenen Batterieeinheit (3), die mit der Motorbaugruppe (2) elektrisch verbunden ist,
**dadurch gekennzeichnet, dass**
die elektrische Radnabe ferner zwei Endkappen (7) aufweist, die jeweils zum Verbinden mit zwei Gabelbeinen (91) ausgebildet sind, wobei die beiden Endkappen (7) jeweils lösbar um entgegengesetzte Enden der Welle (28) angeordnet sind, und die Welle (28) hohl ist und zur Anordnung einer Spindel (92) durch diese ausgebildet ist.

2. Elektrische Radnabe nach Anspruch 1, bei welcher die Batterieeinheit (3) eine Kassette (31) und mehrere Batterien (32) aufweist, und die mehreren Batterien (32) positionell in der Kassette (31) aufgenommen sind.

3. Elektrische Radnabe nach Anspruch 2, bei welcher Innenwände der Kassette (31) und des Gehäuses (1) zwischeneinander mindestens einen Einführbereich (34) definieren, und der mindestens eine Einführbereich (34) für ein einfaches Lösen der Kassette (31) von dem Gehäuse (1) ausgebildet ist.

4. Elektrische Radnabe nach Anspruch 2, bei welcher die Kassette (31) um die Motorbaugruppe (2) herum angeordnet ist, die Kassette (31) mit dem Stator (21) verbunden ist und nicht mit dem Gehäuse (1) verbunden ist, und die mehreren Batterien (32) in Intervallen um die Motorbaugruppe (2) angeordnet sind.

5. Elektrische Radnabe nach Anspruch 1, ferner mit einem ersten Lager (63) und einem zweiten Lager (64), bei welchem das Gehäuse (1) eine Basis (12) und eine Abdeckung (11) aufweist, die Abdeckung (11) lösbar die Basis (12) abdeckt, die Abdeckung (11) ein erstes Durchgangsloch (111) aufweist, die Basis (12) ein zweites Durchgangsloch (121) aufweist, das erste Lager (63) in dem ersten Durchgangsloch (111) aufgenommen ist, das zweite Lager (64) in dem zweiten Durchgangsloch (121) aufgenommen ist, und die Welle (28) durch das erste Lager (63) und das zweite Lager (64) angeordnet ist und über entgegengesetzte Seiten des Gehäuses (1) hinaus nach außen ragt; wobei die Welle (28) ferner einen ersten Endbereich (51), einen Verbindungsbereich (52), einen Flansch (53) und einen zweiten Endbereich (55) aufweist, die aufeinanderfolgend verbunden sind; wobei der erste Endbereich (51) durch das erste Lager (63) und die Abdeckung (11) angeordnet ist, der zweite Endbereich (55) durch das zweite Lager (64) und die Basis (12) angeordnet ist, der Verbindungsbereich (52) mit dem Stator (21) verbunden ist, eine Schnittstelle des Verbindungsbereichs (52) und des ersten Endbereichs (51) einen Stufenbereich (521) aufweist, das erste Lager (63) in axialer Richtung an der Abdeckung (11) und dem Stufenbereich (521) anliegt, und das zweite Lager (64) zwischen der Basis (12) und dem Flansch (53) anliegt.

6. Elektrische Radnabe nach Anspruch 1, bei welcher die Welle (28) ferner eine Achse (57) und mehrere erste Eingreifbereiche (58) aufweist, wobei die mehreren ersten Eingreifbereiche (58) auf der Achse (57) in Umfangsrichtung (42) getrennt angeordnet sind, der Stator (21) eine Perforation (22) und mehrere zweite Eingreifbereiche (23) aufweist, die mehreren zweiten Eingreifbereiche (23) um die Perforation (22) in Umfangsrichtung (42) getrennt angeordnet sind, die Achse (57) durch die Perforation (22) angeordnet ist, die mehreren ersten Eingreifbereiche (58) und die mehreren zweiten Eingreifbereiche (23) ineinandergreifen, wobei die ersten Eingreifbereiche (58) oder die zweiten Eingreifbereiche (23) jeweils eine erste Nut sind, und die jeweils andere Eingreifbereiche, nämlich die ersten Eingreifbereiche (58) oder die zweiten Eingreifbereiche (23), jeweils eine erste Rippe sind.

7. Elektrische Radnabe nach Anspruch 6, bei welcher die Welle (28) ferner einen dritten Eingreifbereich (59) aufweist, der Stator (21) ferner einen vierten Eingreifbereich (24) aufweist, der dritte Eingreifbereich (59) und der vierte Eingreifbereich (24) ineinandergreifen, wobei der dritte Eingreifbereich (59) oder der zweite Eingreifbereich (24) eine zweite Nut sind, und der andere Eingreifbereich, nämlich der vierte Eingreifbereich (59) oder der zweite Eingreifbereich (24), eine zweite Rippe ist; wobei die zweite Nut nicht mit der ersten Nut identisch ist, und die zweite Rippe nicht mit der ersten Rippe identisch ist.

8. Elektrische Radnabe nach Anspruch 1, bei welcher jedes der entgegengesetzten Enden der Welle (28) einen ersten Positionierungsbereich (56) aufweist, jede der beiden Endkappen (7) einen zweiten Positionierungsbereich (71) aufweist, und der zweite Positionierungsbereich (71) und der erste Positionierungsbereich (56) ineinandergreifen; wobei der erste Positionierungsbereich (56) oder der zweite Positionierungsbereich (71) ein Vorsprung ist, und der andere Positionierungsbereich, nämlich der erste Positionierungsbereich (56) oder der zweite Positionierungsbereich (71), eine Ausnehmung ist.

9. Elektrische Radnabe nach Anspruch 7, bei welcher die Batterieeinheit (3) eine Kassette (31) und mehrere Batterien (32) aufweist, und die mehreren Batterien (32) positionell in der Kassette (31) aufgenommen sind; Innenwände der Kassette (31) und des Gehäuses (1) mindestens einen Einführbereich (34) zwischen einander definieren, und der mindestens eine Einführbereich (34) für ein einfaches Lösen der Kassette (31) von dem Gehäuse (1) ausgebildet ist; die Kassette (31) um die Motorbaugruppe (2) herum angeordnet ist, die Kassette (31) mit dem Stator (21) verbunden ist und nicht mit dem Gehäuse (1) verbunden ist, und die mehreren Batterien (32) in Intervallen um die Motorbaugruppe (2) angeordnet sind; wobei die elektrische Radnabe ferner ein erstes Lager (63) und ein zweites Lager (64) aufweist, das Gehäuse (1) eine Basis (12) und eine Abdeckung (11) aufweist, die Abdeckung (11) lösbar die Basis (12) abdeckt, die Abdeckung (11) ein erstes Durchgangsloch (111) aufweist, die Basis (12) ein zweites Durchgangsloch (121) aufweist, das erste Lager (63) in dem ersten Durchgangsloch (111) aufgenommen ist, das zweite Lager (64) in dem zweiten Durchgangsloch (121) aufgenommen ist, die Welle (28) durch das erste Lager (63) und das zweite Lager (64) angeordnet ist und über entgegengesetzte Seiten des Gehäuses (1) hinaus nach außen ragt; wobei die Welle (28) ferner einen ersten Endbereich (51), einen Verbindungsbereich (52), einen Flansch (53) und einen zweiten Endbereich (55) aufweist, die aufeinanderfolgend verbunden sind; wobei der erste Endbereich (51) durch das erste Lager (63) und die Abdeckung (11) angeordnet ist, der zweite Endbereich (55) durch das zweite Lager (64) und die Basis (12) angeordnet ist, der Verbindungsbereich (52) mit dem Stator (21) verbunden ist, eine Schnittstelle des Verbindungsbereichs (52) und des ersten Endbereichs (51) einen Stufenbereich (521) aufweist, das erste Lager (63) in axialer Richtung an der Abdeckung (11) und dem Stufenbereich (521) anliegt, und das zweite Lager (64) zwischen der Basis (12) und dem Flansch (53) anliegt; wobei die elektrische Radnabe ferner zwei Endkappen (7) aufweist, die jeweils zum Verbinden mit zwei Gabelbeinen (91) ausgebildet sind, wobei die beiden Endkappen (7) jeweils lösbar um entgegengesetzte Enden der Welle (28) angeordnet sind, und die Welle (28) hohl ist und zur Anordnung einer Spindel (92) durch diese ausgebildet ist; wobei jedes der entgegengesetzten Enden der Welle (28) einen ersten Positionierungsbereich (56) aufweist, jede der beiden Endkappen (7) einen zweiten Positionierungsbereich (71) aufweist, und der zweite Positionierungsbereich (71) und der erste Positionierungsbereich (56) ineinandergreifen; wobei der erste Positionierungsbereich (56) oder der zweite Positionierungsbereich (71) ein Vorsprung ist, und der andere Positionierungsbereich, nämlich der erste Positionierungsbereich (56) oder der zweite Positionierungsbereich (71), eine Ausnehmung ist; wobei die Kassette (31) aus Kunststoff besteht; wobei die Kassette (31) ringförmig ist, wobei die Motorbaugruppe (2) in einen Mittelbereich der Kassette (31) eingesetzt ist; wobei der mindestens eine Einführbereich (34) mehrere Einführbereiche (34) aufweist, und eine Außenumfangswand der Kassette (31) mehrere Öffnungen (33) aufweist, die mehreren Batterien (32) teilweise aus den mehreren Öffnungen (33) freiliegen; wobei eine elektronische Steuereinheit (8) an der Basis (12) angeordnet ist, und die elektronische Steuereinheit (8) am zweiten Endbereich (55) angeordnet ist und an dem Flansch (53) angeordnet ist; wobei der Flansch (53) ein sich in axialer Richtung (41) erstreckendes Durchgangsloch (54) aufweist; wobei eine dem zweiten Durchgangsloch (121) zugewandte Seite des Flanschs (53) ein erstes ringförmiges Element (61) aufweist, und eine der elektronischen Steuereinheit (8) zugewandte Seite des Flanschs (53) ein zweites ringförmiges Element (62) aufweist; wobei jeder erste Eingreifbereich (58) eine erste Rippe ist, jeder zweite Eingreifbereich (23) eine erste Nut ist, jeder dritte Eingreifbereich (59) eine zweite Rippe ist, jeder vierte Eingreifbereich (24) eine zweite Nut ist; wobei die zweite Rippe in Umfangsrichtung eine Länge von mehr als dem Doppelten einer Länge der ersten Rippe aufweist; wobei die Achse (57) den ersten Endbereich (51), den Verbindungsbereich (52) den Flansch (53) und den zweiten Endbereich (55) aufweist, und der Verbindungsbereich (52) die mehreren ersten Eingreifbereiche (58) aufweist; wobei der Stator (21) einen Rahmen (35) und einen Wicklungsspulensatz (26) aufweist, der Wicklungsspulensatz (26) um den Rahmen (25) gewickelt ist, und die Welle (28) durch den Rahmen (25) angeordnet ist; wobei der Rahmen (25) die Perforation (22), die mehreren zweiten Eingreifbereiche (23) und den vierten Eingreifbereich (24) aufweist, und die Kassette (31) mit dem Rahmen (25) verbunden ist.

## Revendications

1. Moyeu de roue électrique, comprenant :
une coque (1) ;
un ensemble moteur (2), comprenant un stator (21), un rotor (27) et un arbre (28), le stator (21) et le rotor (27) étant reçus dans la coque (1) et pouvant tourner de manière relative, le rotor (27) étant connecté et pouvant tourner avec la coque (1), l'arbre (28) définissant une direction axiale (41) et une direction circonférentielle (42), l'arbre (28) étant mobile dans la direction axiale (41) et disposé à travers le stator (21), l'arbre (28) et le stator (21) ne pouvant pas tourner de manière relative dans la direction circonférentielle (42) ; et
une unité de batterie (3), reçue dans la coque (1), connectée électriquement à l'ensemble moteur (2)
**caractérisé en ce que**
le moyeu de roue électrique inclut en outre deux capuchons d'extrémité (7) configurés pour être connectés respectivement à deux bras de fourche (91), dans lequel les deux capuchons d'extrémité (7) sont disposés de manière amovible respectivement autour des extrémités opposées de l'arbre (28), et l'arbre (28) est creux et configuré pour qu'une broche (92) soit disposée à travers celui-ci.

2. Moyeu de roue électrique selon la revendication 1, dans lequel l'unité de batterie (3) comprend une cartouche (31) et une pluralité de batteries (32), et la pluralité de batteries (32) sont reçues en position à l'intérieur de la cartouche (31).

3. Moyeu de roue électrique selon la revendication 2, dans lequel les parois internes de la cartouche (31) et de la coque (1) définissent au moins une partie d'insertion (34) entre elles, et la au moins une partie d'insertion (34) est configurée pour un détachement facile de la cartouche (31) à partir de la coque (1).

4. Moyeu de roue électrique selon la revendication 2, dans lequel la cartouche (31) est disposée autour de l'ensemble moteur (2), la cartouche (31) est connectée au stator (21) et n'est pas connectée à la coque (1), et la pluralité de batteries (32) sont disposées autour de l'ensemble moteur (2) à des intervalles.

5. Moyeu de roue électrique selon la revendication 1, comprenant en outre un premier palier (63) et un second palier (64), dans lequel la coque (1) comprend une base (12) et un couvercle (11), le couvercle (11) recouvre la base (12) de manière amovible, le couvercle (11) comprend un premier trou traversant (111), la base (12) comprend un second trou traversant (121), le premier palier (63) est reçu dans le premier trou traversant (111), le second palier (64) est reçu dans le second trou traversant (121), et l'arbre (28) est disposé à travers le premier palier (63) et le second palier (64) et fait saillie au-delà des côtés opposés de la coque (1) ; l'arbre (28) comprend en outre une première partie d'extrémité (51), une partie de connexion (52), une bride (53) et une seconde partie d'extrémité (55) connectées en séquence ; la première partie d'extrémité (51) est disposée à travers le premier palier (63) et le couvercle (11), la seconde partie d'extrémité (55) est disposée à travers le second palier (64) et la base (12), la partie de connexion (52) est connecté au stator (21), une intersection de la partie de connexion (52) et de la première partie d'extrémité (51) comprend une partie étagée (521), le premier palier (63) est en butée contre le couvercle (11) et la partie étagée (521) dans la direction axiale (41), et le second palier (64) est en butée entre la base (12) et la bride (53).

6. Moyeu de roue électrique selon la revendication 1, dans lequel l'arbre (28) comprend en outre un axe (57) et une pluralité de premières parties de mise en prise (58), la pluralité de premières parties de mise en prise (58) sont agencées séparément sur l'axe (57) dans la direction circonférentielle (42), le stator (21) comprend une perforation (22) et une pluralité de deuxièmes parties de mise en prise (23), la pluralité de deuxièmes parties de mise en prise (23) sont agencées séparément autour de la perforation (22) dans la direction circonférentielle (42), l'axe (57) est disposé à travers la perforation (22), la pluralité de premières parties de mise en prise (58) et la pluralité de deuxièmes parties de mise en prise (23) sont mises en prise les unes avec les autres, une de chacune desdites premières parties de mise en prise (58) et de chacune desdites deuxièmes parties de mise en prise (23) est une première rainure, et l'autre de chacune desdites premières parties de mise en prise (58) et de chacune desdites secondes parties de mise en prise (23) est une première nervure.

7. Moyeu de roue électrique selon la revendication 6, dans lequel l'arbre (28) comprend en outre une troisième partie de mise en prise (59), le stator (21) comprend en outre une quatrième partie de mise en prise (24), la troisième partie de mise en prise (59) et la quatrième partie de mise en prise (24) sont mises en prise l'une avec l'autre, l'une de la troisième partie de mise en prise (59) et de la quatrième partie de mise en prise (24) est une seconde rainure, et l'autre de la troisième partie de mise en prise (59) et de la quatrième partie de mise en prise (24) est une seconde nervure ; la seconde rainure n'est pas identique à la première rainure, et la seconde nervure n'est pas identique à la première nervure.

8. Moyeu de roue électrique selon la revendication 1, dans lequel chacune des extrémités opposées de l'arbre (28) comprend une première partie de positionnement (56), chacun des deux capuchons d'extrémité (7) comprend une seconde partie de positionnement (71), et la seconde partie de positionnement (71) et la première partie de positionnement (56) sont mises en prise l'une avec l'autre ; l'une de la première partie de positionnement (56) et de la seconde partie de positionnement (71) est une saillie, et l'autre de la première partie de positionnement (56) et de la seconde partie de positionnement (71) est un évidement.

9. Moyeu de roue électrique selon la revendication 7, dans lequel l'unité de batterie (3) comprend une cartouche (31) et une pluralité de batteries (32), et la pluralité de batteries (32) sont reçues en position à l'intérieur de la cartouche (31) ; les parois internes de la cartouche (31) et de la coque (1) définissent au moins une partie d'insertion (34) entre elles, et la au moins une partie d'insertion (34) est configurée pour un détachement facile de la cartouche (31) à partir de la coque (1) ; la cartouche (31) est disposée autour de l'ensemble moteur (2), la cartouche (31) est connectée au stator (21) et n'est pas connectée à la coque (1), et la pluralité de batteries (32) sont disposées autour de l'ensemble moteur (2) à des intervalles ; le moyeu de roue électrique comprend en outre un premier palier (63) et un second palier (64), la coque (1) comprend une base (12) et un couvercle (11), le couvercle (11) recouvre la base (12) de manière amovible, le couvercle (11) comprend un premier trou traversant (111), la base (12) comprend un second trou traversant (121), le premier palier (63) est reçu dans le premier trou traversant (111), le second palier (64) est reçu dans le second trou traversant (121), l'arbre (28) est disposé à travers le premier palier (63) et le second palier (64) et fait saillie au-delà des côtés opposés de la coque (1) ; l'arbre (28) comprend en outre une première partie d'extrémité (51), une partie de connexion (52), une bride (53) et une deuxième partie d'extrémité (55) connectées en séquence ; la première partie d'extrémité (51) est disposée à travers le premier palier (63) et le couvercle (11), la deuxième partie d'extrémité (55) est disposée à travers le deuxième palier (64) et la base (12), la partie de connexion (52) est connectée au stator (21), une intersection de la partie de connexion (52) et de la première partie d'extrémité (51) comprend une partie étagée (521), le premier palier (63) est mis en butée contre le couvercle (11) et la partie étagée (521) dans la direction axiale (41), et le second palier (64) est mis en butée entre la base (12) et la bride (53) ; le moyeu de roue électrique comprend en outre deux capuchons d'extrémité (7) configurés pour être respectivement connectés à deux bras de fourche (91), les deux capuchons d'extrémité (7) sont disposés de manière amovible autour d'extrémités opposées de l'arbre (28), et l'arbre (28) est creux et configuré pour qu'une broche (92) soit disposé à travers celui-ci ; chacune des extrémités opposées de l'arbre (28) comprend une première partie de positionnement (56), chacun des deux capuchons d'extrémité (7) comprend une seconde partie de positionnement (71), et la seconde partie de positionnement (71) et la première partie de positionnement (56) sont mises en prise l'une avec l'autre ; l'une de la première partie de positionnement (56) et de la deuxième partie de positionnement (71) est une saillie, et l'autre de la première partie de positionnement (56) et de la deuxième partie de positionnement (71) est un évidement ; la cartouche (31) est réalisée en matière plastique ; la cartouche (31) est annulaire, l'ensemble moteur (2) est inséré dans une partie centrale de la cartouche (31) ; la au moins une partie d'insertion (34) comprend une pluralité de parties d'insertion (34), et une paroi circonférentielle externe de la cartouche (31) comprend une pluralité d'ouvertures (33), la pluralité de batteries (32) sont exposées partiellement à partir de la pluralité d'ouvertures (33) ; une unité de commande électronique (8) est disposée sur la base (12), et l'unité de commande électronique (8) est positionnée sur la seconde partie d'extrémité (55) et est mise en en butée contre la bride (53) ; la bride (53) comprend un trou de pénétration (54) s'étendant dans la direction axiale (41) ; un côté de la bride (53) orienté vers le second trou traversant (121) comprend un premier élément annulaire (61), et un côté de la bride (53) orienté vers l'unité de commande électronique (8) comprend un second élément annulaire (62) ; chaque dite première partie de mise en prise (58) est une dite première nervure, chaque dite deuxième partie de mise en prise (23) est une dite première rainure, chaque dite troisième partie de mise en prise (59) est une dite seconde nervure, chaque dite quatrième partie de mise en prise (24) est une dite seconde rainure ; dans la direction circonférentielle (42), la seconde nervure a une longueur supérieure à 2 fois une longueur de la première nervure ; l'axe (57) comprend la première partie d'extrémité (51), la partie de connexion (52), la bride (53) et la seconde partie d'extrémité (55), et la partie de connexion (52) comprend la pluralité de premières parties de mise en prise (58) ; le stator (21) comprend un bâti (25) et un ensemble de bobine d'enroulement (26), l'ensemble de bobine d'enroulement (26) est enroulé autour du bâti (25), et l'arbre (28) est disposé à travers le bâti (25) ; le bâti (25) comprend la perforation (22), la pluralité de deuxièmes parties de mise en prise (23) et la quatrième partie de mise en prise (24), et la cartouche (31) est connectée au bâti (25).
